Europäisches Patentamt

European Patent Office

Office européen des brevets

(19)

(11) Numéro de publication: **0 042 333**
**B1**

(12) **FASCICULE DE BREVET EUROPEEN**

(45) Date de publication du fascicule du brevet: **21.11.84**

(21) Numéro de dépôt: **81400928.8**

(22) Date de dépôt: **11.06.81**

(51) Int. Cl.³: **F 01 P 7/04,** F 01 P 5/14,
F 01 P 11/16, G 05 D 23/24

(54) **Dispositif pour la commande des moyens de ventilation d'un moteur à combustion interne.**

(30) Priorité: **16.06.80 FR 8013299**

(43) Date de publication de la demande:
**23.12.81 Bulletin 81/51**

(45) Mention de la délivrance du brevet:
**21.11.84 Bulletin 84/47**

(84) Etats contractants désignés:
**DE GB IT NL SE**

(56) Documents cités:
**DE-A-2 438 728**
**DE-A-2 849 275**
**FR-A-1 517 328**
**FR-A-2 142 761**
**FR-A-2 228 151**
**FR-A-2 356 813**
**US-A-3 629 677**

(73) Titulaire: **ACIERS ET OUTILLAGE PEUGEOT**
**Société dite:**
**F-25400 Audincourt (Doubs) (FR)**

(72) Inventeur: **Barge, Jean**
**42 Rue d'Audincourt**
**F-25200 Montbeliard (FR)**

(74) Mandataire: **Moncheny, Michel et al**
**c/o Cabinet Lavoix 2 Place d'Estienne d'Orves**
**F-75441 Paris Cedex 09 (FR)**

Courier Press, Leamington Spa, England.

## Description

La présente invention est relative au refroidissement des moteurs à combustion interne et elle concerne plus particulièrement, un groupe motoventilateur capable de refroidir le moteur par exemple en étant associé au radiateur.

A partir d'une certaine puissance, il est nécessaire du refroidir un moteur à combustion interne à l'aide d'un fluide caloporteur, de telle manière que ce fluide après s'être chargé de calories dans le moteur, puisse les échanger dans un radiateur avec l'atmosphère ambiante. Pour obtenir un échange thermique suffisant, il est habituel, par ailleurs, d'associer au radiateur un groupe motoventilateur permettant de forcer un courant d'air à travers ce radiateur.

Le plus souvent, le groupe motoventilateur est commandé automatiquement, grâce à une boucle de réglage par tout ou rien qui comporte notamment un contact électrique sensible à la température placé dans le radiateur et relié électriquement au circuit du moteur, de façon à alimenter ou à couper ce dernier en fonction de la température du fluide traversant le radiateur. Une autre façon de réguler la température du fluide caloporteur, consiste à prévoir, entre le moteur et le ventilateur, un embrayage électromagnétique qui est serré ou desserré en fonction de l'ouverture ou de la fermeture du contact thermique.

Un tel dispositif de commande présente donc un fonctionnement discontinu, le thermocontact réagissant essentiellement aux températures extrêmes de la plage de températures pour laquelle il est destiné. En d'autres termes, le contact se ferme pour l'entraînement du ventilateur lorsqu'une température supérieure est atteinte, tandis qu'au contraire il s'ouvre pour rendre le ventilateur inopérant lorsque cette température devient égale à la valeur inférieure de la plage.

A l'heure actuelle, on a de plus en plus tendance à faire fonctionner les moteurs à combustion interne à une température aussi élevée que possible, car on a constaté que dans ces conditions, un tel moteur présente le meilleur rendement énergétique. C'est pourquoi, les constructeurs de ces moteurs prévoient en général de mélanger au fluide caloporteur, qui est généralement de l'eau, des produits qui assurent, outre la fonction de l'antigel, l'élévation du point d'ébullition, ceci complété par une mise sous pression du circuit de refroidissement qui élève encore la température d'ébullition de l'eau.

Il est évident que le bon fonctionnement d'un tel système de refroidissement dépend en grande partie du thermocontact. Or, il s'est avéré en pratique que ces contacts ne peuvent être fabriqués en grandes quantités pour une plage de températures présentant une faible étendue. En d'autres termes, certains de ces thermocontacts peuvent présenter une plage de températures dont la valeur supérieure est trop élevée, si bien que lorsqu'ils sont montés dans un circuit de refroidissement d'un moteur à combustion interne, ce dernier fonctionnera à une température supérieure trop élevée, malgré les mesures que l'on peut prendre pour augmenter la température d'ébullition de l'eau. En pareil cas, le moteur ne pourra donc fonctionner de façon satisfaisante.

A ce premier inconvénient, s'en ajoute un second. En effet, il est naturellement souhaitable de refroidir le moteur en consommant le moins d'énergie possible, car cette énergie est en définitive fournie par le moteur lui-même. Or, dans le cas d'un véhicule automobile, et surtout à haut régime, la vitesse propre du véhicule peut réduire la température à une valeur intermédiaire entre les valeurs extrêmes de la plage du thermocontact.

Cependant, étant donné que dans ces conditions de régime élevé, la température inférieure de cette plage n'est pas encore atteinte, le ventilateur continue à tourner inutilement et il en résulte donc une perte d'énergie correspondante.

Si ces inconvénients sont gênants pour les moteurs à refroidissement par eau, des pertes d'énergie encore plus importantes peuvent être rencontrées dans les moteurs à refroidissement par air car ceux-ci sont refroidis par un ventilateur directement couplé au vilebrequin avec lequel il reste toujours solidaire en rotation.

On a déjà proposé, par exemple dans le FR—A—2 228 151 un groupe motoventilateur pour la commande des moyens de ventilation du radiateur d'un moteur à combustion interne comportant un capteur de température sensible à une plage continue de température et placé au contact d'un fluide caloporteur circulant dans le moteur ainsi qu'un circuit de commande de puissance pour assurer l'alimentation du ou des moteurs d'entraînement des moyens de ventilation du groupe en fonction des variations de la température du fluide caloporteur, par l'intermédiaire d'une boucle de réglage continu connectée entre le capteur et le circuit de commande, cette boucle comprenant un circuit à seuil fixant la valeur inférieure de ladite plage de température.

Ainsi, on peut obtenir une adaptation du fonctionnement des moyens de ventilation à chaque condition de fonctionnement du moteur dans toute la plage de températures à laquelle le capteur est sensible. En toutes circonstances, les moyens de ventilation ne consomment donc que l'énergie nécessaire pour obtenir la température souhaitée. Il en est particulièrement ainsi pendant la période d'échauffement du moteur après démarrage à froid, la régulation ne commençant à fonctionner qu'à partir du seuil déterminé par ledit circuit à seuil. Par ailleurs, la suppression du thermocontact permet d'obtenir une plus grande sécurité dans la zone haute de fonctionnement, car les capteurs de température tels que les thermistances ont une précision plus élevée moyennant un prix de revient comparable à celui des thermocontacts habituels.

Le groupe motoventilateur du FR—A— 2 228 151 décrit ci-dessus présente donc des avantages certains, mais il reste néanmoins entaché d'un inconvénient grave, car son fonctionnement est entièrement tributaire du bon fonctionnement du capteur de température. En effet, si l'information de température qu'il fournit disparait, le moteur du ventilateur ne peut plus être enclenché et il en résulte la dégradation très rapide du moteur à combustion interne.

C'est pourquoi la présente invention a pour but un groupe moto-ventilateur du genre indiqué ci-dessus qui est caractérisé en ce que l'entrée de la boucle de réglage à laquelle est raccordé ledit capteur est connectée en outre à un circuit de protection contre une rupture des connexions allant audit capteur, ce circuit comprenant une source de tension de référence, un circuit capable de détecter un potentiel aux bornes du capteur et un comparateur qui surveille par ses entrées ladite source de référence et ledit circuit de détection pour commander ledit circuit de commande de puissance de manière qu'il applique la pleine puissance aux moteurs en cas de rupture de l'une desdites connexions du capteur.

Le montage ainsi conçu peut être une sécurité absolue pour sauvegarder le moteur à combustion interne car ce dernier en cas de panne du capteur sera refroidi par un moteur qui entraîne son ventilateur à pleine puissance.

Il convient de signaler que le FR—A—2 356 813 décrit un dispositif électronique de réglage de vitesse pour motoventilateur dans lequel celui comporte un embrayage à commande électromagnétique. Dans ce cas, en cas de panne du circuit électronique, cet embrayage reste serré par défaut d'alimentation de sa bobine de commande. Par conséquent, dans ce cas, il ne s'agit pas d'une protection contre une panne du capteur de température.

L'invention sera mieux comprise à l'aide de la description qui va suivre, donnée uniquement à titre d'exemple et faite en se référant aux dessins annexés, sur lesquels:

— La Fig. 1 est un schéma électrique d'un dispositif de commande suivant l'invention;
— la Fig. 2 montre une variante d'un détail du schéma représenté sur la Fig. 1;
— la Fig. 3 est un diagramme montrant plusieurs courbes illustrant le fonctionnement du dispositif suivant l'invention;
— la Fig. 4 est un diagramme montrant également plusieurs courbes des signaux apparaissant dans ce dispositif de commande;
— la Fig. 5 est également un diagramme montrant une courbe de fonctionnement du dispositif suivant l'invention;
— la Fig. 6 montre un détail d'un variante du dispositif de commande équipé pour assurer l'alimentation de deux moteurs d'entraînement;
— la Fig. 7 est un schéma montrant un détail du dispositif de commande pouvant être utilisé accessoirement pour engendrer un signal d'avertissement;
— la Fig. 8 montre un schéma très simplifié de ce dispositif de commande utilisé pour l'alimentation d'un seul motoventilateur;
— la Fig. 9 est également un schéma très simplifié d'un dispositif de commande pour l'alimentation de deux motoventilateurs;
— la Fig. 10 montre l'implantation d'un dispositif de commande dans le moteur d'un groupe motoventilateur; et
— les Fig. 11 et 12 montrent deux variantes de la disposition représentée sur la Fig. 10.

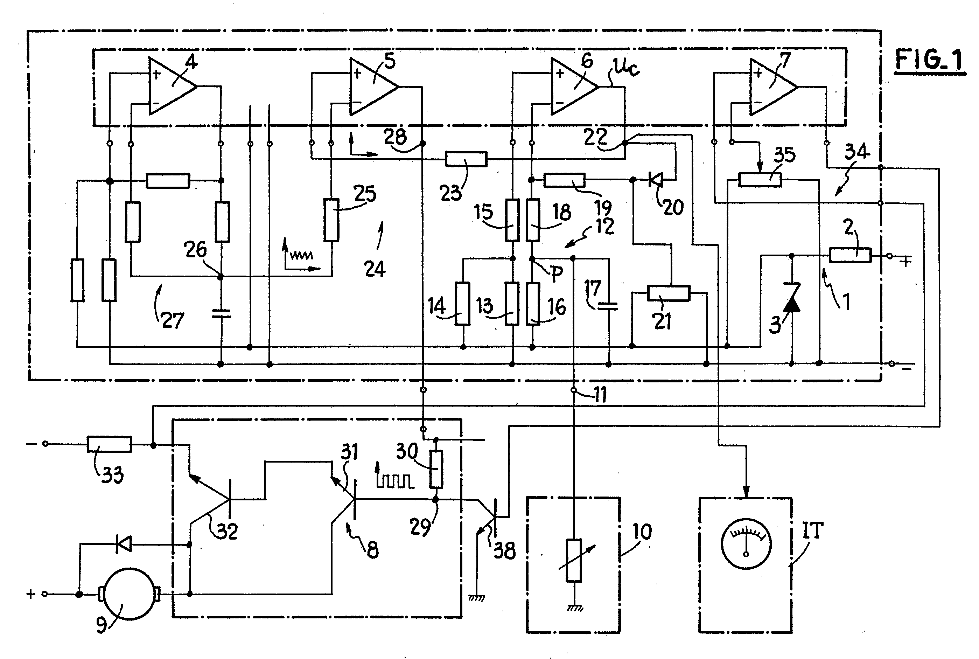

La Fig. 1 représente un dispositif de commande suivant l'invention destiné à l'alimentation d'un seul motoventilateur utilisé ici pour le circuit de refroidissement d'un moteur à combustion interne à refroidissement par eau d'un véhicule automobile par exemple.

Un stabilisateur de tension 1 assure par l'intermédiaire d'une résistance 2 et une diode Zener 3, la stabilisation d'une tension de 12 volts par exemple provenant d'une batterie d'accumulateurs (non représentée).

Ce stabilisateur alimente en parallèle les divers organes du dispositif de commande et notamment les amplificateurs opérationnels 4, 5, 6 et 7 d'un circuit intégré, ainsi que la commande d'un circuit de puissance 8 raccordé à un moteur d'entraînement 9 d'un ventilateur. Ce circuit de puissance 8 est alimenté directement à partir de la source de tension.

Le dispositif de commande comporte un capteur de température 10 qui, dans l'exemple décrit, est une thermistance ayant ici un coefficient de température négatif. Cette thermistance est montée dans le radiateur (non représenté) du circuit de refroidissement du moteur à combustion interne. La thermistance 10 est reliée par l'intermédiaire d'une borne de connexion 11 à un comparateur 12 dont l'élément actif est l'amplificateur opérationnel 6.

Ce comparateur 12 comporte tout d'abord un diviseur de tension constitué par des résistances 13 et 14 dont le point de jonction est raccordé par l'intermédiaire d'une résistance 15 à l'entrée non inverseuse de l'amplificateur 6.

La borne 11 est connectée à la thermistance 10 et reliée au point de jonction P du montage en série d'une résistance 16 et d'un condensateur 17. Ce point de jonction P est relié par une résistance 18 à l'entrée inverseuse de l'amplificateur 6.

Ce dernier est pourvu d'un circuit de contre-réaction composé d'une résistance 19 et d'une diode 20, le point de jonction entre ces deux composants étant raccordé au curseur d'un potentiomètre 21 dont les points extrêmes sont branchés respectivement aux bornes du stabilisateur de tension 1. La sortie 22 de l'amplificateur opérationnel 6 est reliée par l'intermédiaire d'une résistance 23 à l'entrée non inverseuse de l'amplificateur opérationnel 5 qui constitue l'élément actif d'un autre comparateur 24. L'entrée inverseuse de l'amplificateur 5 est connectée par une résistance 25 à la sortie 26 d'un oscillateur 27 de signaux triangulaires dont la construction est classique et qui comporte comme élément actif l'amplificateur opérationnel 4.

La sortie 28 de l'amplificateur opérationnel 5 est raccordée à l'entrée 29 du circuit de puissance 8 par l'intermédiaire d'une résistance 30. Plus précisément, l'entrée 29 est la base d'un premier transistor d'amplification 31, monté en montage de DARLINGTON commandant lui-même un transistor de puissance 32 alimentant directement l'induit du moteur 9. Ce circuit d'alimentation comporte en série également, une résistance 33 de mesure de courant qui fournit le signal d'entrée pour un circuit 34 de protection contre les surintensités dont élément actif est l'amplificateur opérationnel 7. En effet, la jonction entre l'émetteur du transistor 32 et la résistance 33 est connectée à l'entrée non inverseuse de l'amplificateur 7, l'entrée inverseuse de ce même amplificateur êtant reliée au curseur d'un potentiomètre 35 dont les points extrêmes sont branchés aux bornes de sortie du stabilisateur de tension 1. Le potentiomètre 35 fixe le seuil de l'intensité autorisée à parcourir le circuit d'alimentation du moteur 9.

La borne de sortie 22 de l'amplificateur 6 qui fournit une tension $U_c$ fonction de la température détectée par la thermistance 10 est appliquée à un indicateur de température IT qui, si le dispositif de commande est associé à un moteur de véhicule automobile, se trouve avantageusement sur le tableau de bord. Il est à noter que grâce à cette disposition, la thermistance habituelle nécessaire pour mesurer la température de l'eau de refroidissement et pour afficher la valeur mesurée sur le tableau de bord peut être supprimée, la thermistance 10 jouant donc le double rôle de capteur pour le circuit de commande et d'organe d'affichage de la température.

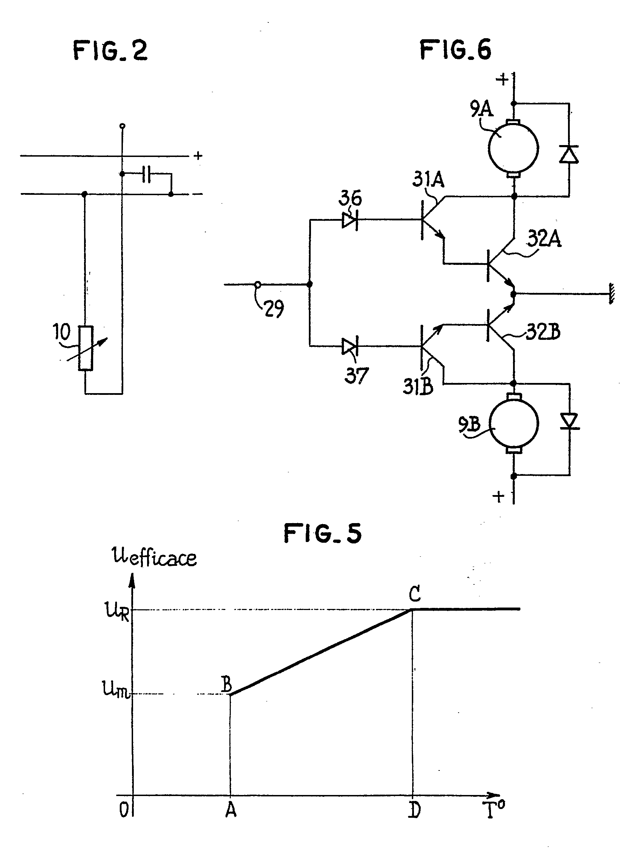

Sur la Fig. 2, on a représenté une variante du raccordement de la thermistance 10 dans le circuit que l'on vient de décrire. Dans ce cas, l'une des bornes de la thermistance 10 n'est pas raccordée à la masse comme représentée à la Fig. 1, mais à la borne négative du circuit de commande. Cette disposition permet d'éliminer les parasites pouvant se produire sur la masse du véhicule par exemple et est la seule possible si la thermistance est solidaire d'un carter en matière plastique non conductrice de l'électricité.

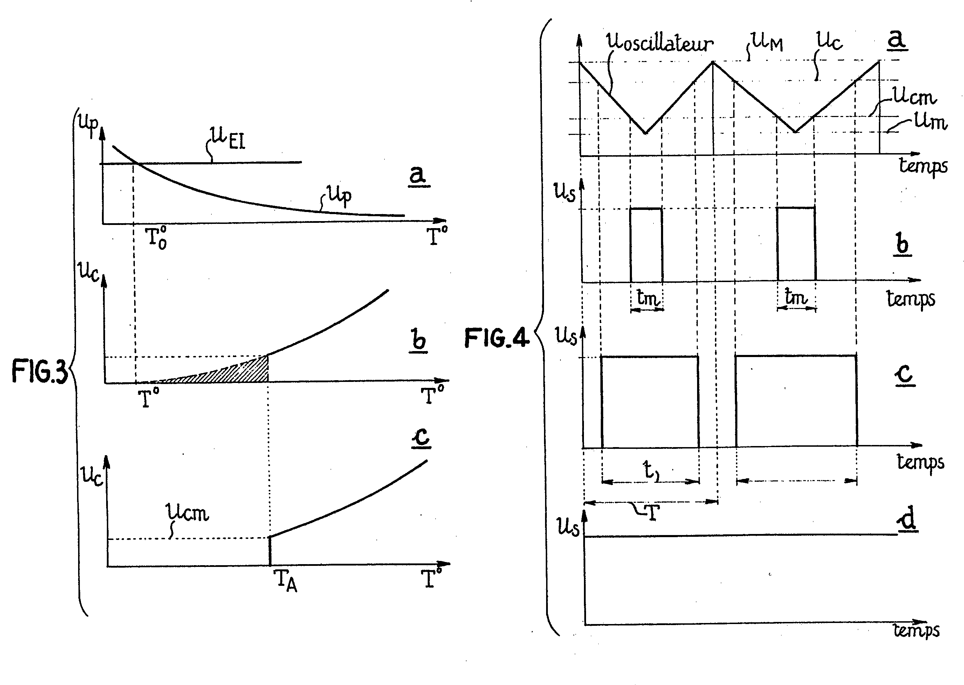

Le fonctionnement du circuit de commande que l'on vient de décrire sera maintenant examiné à l'aide des diagrammes représentés sur les Fig. 3 à 5.

Les variations de température détectées par la thermistance 10 sont converties en variations de tension de la façon suivante.

La thermistance 10 et la résistance 16 constituent un diviseur variable de tension dont la tension de sortie $U_p$ apparaît sur la jonction P. Cette tension (Fig. 3a) qui représente la température du circuit de refroidissement est amplifiée par l'amplificateur opérationnel 6 à partir d'un seuil fixé par la valeur d'une tension fixe $U_{EI}$ appliquée à l'entrée non inverseuse de cet amplificateur et engendrée par le diviseur de tension composé des résistances 13 et 14. De là sorte, le système ne commence à réagir qu'à partir d'une certaine température prédéterminée $T_o$.

La boucle de régulation ne fonctionne donc pas jusqu'à ce que cette température $T_o$ soit atteinte, (cas du démarrage à froid du moteur à combustion interne). La tension de sortie $U_c$ de l'amplificateur 6 représentée à la Fig. 3b est soumise à la contre réaction du circuit qui est composé de la résistance 19 et de la diode 20 et dans lequel est injectée une tension de réglage provenant du potentiomètre 21 et destinée à polariser la diode 20 en sens inverse. Il en résulte que la tension $U_c$ n'apparaît sur la jonction 22 qu'à partir d'un certain seuil, la partie non désirée (hachurée sur la Fig. 3b) de cette tension étant donc supprimée. L'allure de la tension sur la jonction 22 est donc celle de la courbe de la Fig. 3c, la valeur inférieure de cette tension étant désignée par $U_{cm}$.

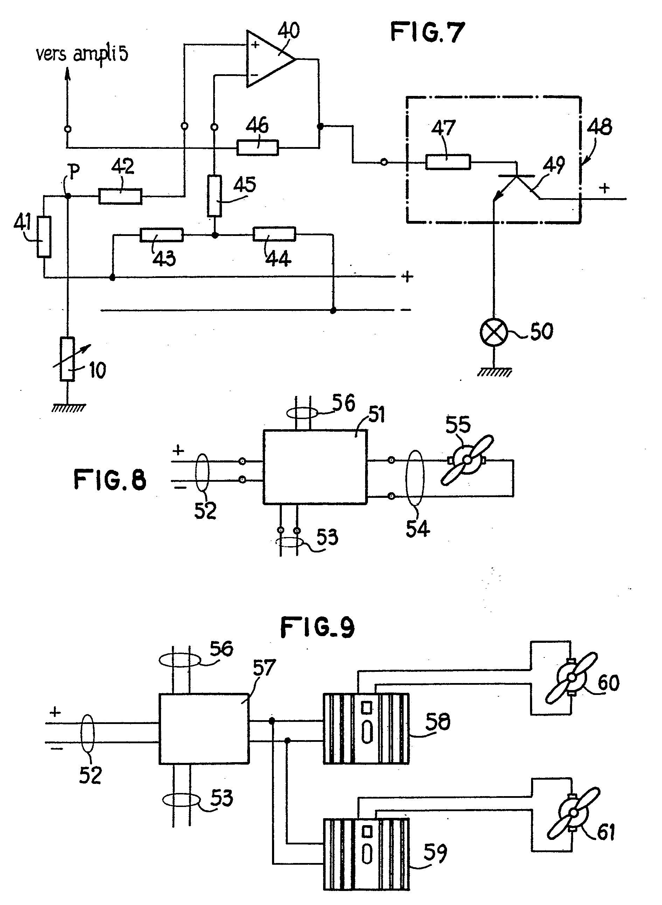

La tension de la jonction 22 est appliquée à l'entrée non inverseuse de l'amplificateur 5 pour assurer une comparaison avec le signal de sortie de l'oscillateur 27 qui est appliqué sur l'entrée inverseuse de ce même amplificateur. La valeur minimale de la tension triangulaire issue de l'oscillateur étant égale à $U_m$ (Fig. 4a), la valeur de la tension $U_{cm}$ est choisie de telle manière par le réglage du potentiomètre 21 qui $U_{cm}>U_m$.

La comparaison des tensions d'entrée de l'amplificateur 5 a pour effet la production de trains d'impulsions $U_s$ dont la fréquence est celle de l'oscillateur 27 et dont la largeur d'impulsion est déterminée par la valeur de la tension $U_s$, variable dans la plage de $U_{cm}$ à $U_M$ en fonction de la température.

Le rapport cyclique minimal (Fig. 4b) du train d'impulsions est:

$$S = \frac{tm}{T}$$

dans laquelle:

S=rapport cyclique
tm=durée minimale des impulsions
T=durée de la période du signal triangulaire.

Lorsque $U_M>U_c>U_{cm}$ (Fig. 4c), le rapport cyclique S varie suivant $t$:

$$S = \frac{t}{T}$$

Lorsque $U_c > U_M$ (Fig. 4d), la tension $U_s$ apparaît de façon continue à la sortie 28 de l'amplificateur 5.

On voit donc que la borne de sortie 29 fournit un signal d'énergie variable, fonction du rapport cyclique S variant entre

$$\frac{tm}{T}$$

% et 100% et piloté par la température de l'eau de refroidissement du moteur.

L'énergie apparaissant sur la borne 29 étant d'un niveau faible, elle est insuffisante pour commander directement un circuit de puissance pour le moteur 9 et elle est donc amplifiée par les transistors 31 et 32 de sorte que le moteur 9 recevra par le transistor 32, une énergie proportionnelle à l'énergie sur la borne 29 et variant dans le rapport de

$$\frac{t}{T}$$

à 1 par rapport à l'énergie pouvant être fournie par la source d'alimentation telle que le réseau du véhicule.

La Fig. 6 montre que l'on peut commander deux moteurs 9A et 9B par l'intermédiaire de transistors respectifs 31A, 31B et 32A, 32B en montant par sécurité deux diodes de séparation 36 et 37 dans le circuit.

Si on veut commander plus de deux moteurs, il est avantageux d'amplifier une première fois, le signal de la borne 29 avant de commander *n* circuits de puissance tels que ceux représentés sur la Fig. 6.

La Fig. 5 représente la courbe de réglage de la tension efficace appliquée au moteur 9 (Fig. 1) en fonction de la température.

Le montage décrit ci-dessus permet de faire varier facilement 1) l'intervalle AD (plage de températures) 2) le point A (début souhaité de rotation du moteur), 3) la valeur $U_m$ qui est la tension minimale de début de rotation et 4) la température (point D) à laquelle le montage commande la pleine vitesse.

Les valeurs des résistances 13, 14, 16 et 19, de la diode 20 et du potentiomètre 21 déterminent le seuil de début de rotation (Point A) sous la tension $U_{cm}$ dont la valeur efficace est:

$$U_{cm} = U_R S = U_R \frac{tm}{T}$$

Les composants résistifs de l'oscillateur 27 déterminent la valeur de la tension $U_m$ qui comparée à la tension $U_c$ peut donner une tension constante (Fig. 4d) au lieu d'un train d'impulsions.

Dans la plupart des cas, le potentiomètre 21 permet de faire varier l'allure de la courbe de la Fig. 5 sans modifications importantes des autres composants. Le montage décrit peut donc être fabriqué en grandes séries pour des utilisations très différentes avec des moteurs à combustion interne de toute nature.

Il peut être utile de limiter l'intensité débitée par le circuit de puissance 8:

— pour éviter la destruction de ce circuit si sa sortie est mise accidentellement en court-circuit;
— pour éviter un dimensionnement trop important du ou des transistors 31 pour qu'ils résistent à la forte pointe d'intensité au démarrage du ou des moteurs 9.

On peut admettre une réduction de la pointe d'intensité au démarrage, car un moto-ventilateur ne nécessite pas un couple important à cet instant.

La limitation du courant est réalisée par une comparaison dans l'amplificateur 7 de la tension de mesure d'intensité prélevée aux bornes de la faible résistance 33 et d'une tension de référence ajustable engendrée sur le curseur du potentiomètre 35.

Si la tension de mesure est trop élevée et dépasse la tension de référence, l'amplificateur 7 débloque un transistor 38 qui permet de dériver vers la masse tout ou partie du signal apparaissant sur la borne 29. De ce fait, le transistor 31 sera rendu non conducteur et l'alimentation du moteur 9 est suspendue.

La Fig. 7 représente le schéma d'un circuit de protection du montage représenté sur la Fig. 1 et qui peut venir compléter celui-ci ou remplacer la montage le limitation de courant dont on vient de décrire le fonctionnement. En effet, la destruction de la thermistance 10, le débranchement du circuit à la jonction P (Fig. 1) ou toute coupure dans le circuit de la Fig. 2 supprime à la commande, l'information de température. Le moto-ventilateur 9 ne peut plus être enclenché, le moteur thermique s'échauffe rapidement et sa destruction totale est très rapide.

Le montage représenté à la Fig. 7 peut être une sécurité absolue pour sauvegarder le moteur thermique en alimentant en pleine tension le ou les moto-ventilateurs en cas de suppression du signal venant de la thermistance.

Le circuit de protection de la Fig. 7 comporte un amplificateur opérationnel 40 dont l'entrée non inverseuse est reliée à un diviseur de tension composé de la résistance 41 et de la thermistance de mesure 10, le point intermédiaire P de ce diviseur étant relié à l'entrée en question par une résistance 42. L'entrée inverseuse de l'amplificateur est connectée à un diviseur de tension composé des résistances 43 et 44 fournissant à cette entrée une référence fixe par l'intermédiaire d'uné résistance 45. La sortie de l'amplificateur 40 est reliée par une résistance 46 à l'entrée non inverseuse de l'amplificateur opérationnel 5 (Fig. 1) et à une autre résistance 47 faisant partie d'un circuit de signalisation 48 comportant un transistor amplificateur 49 qui commande une lampe de signalisation 50 ou tout autre organe avertisseur analogue.

L'amplificateur 40 se comporte en comparateur. Si la coupure du circuit de la thermistance 10 intervient, il n'y a plus de tension, ni à la jonction P, ni à l'entrée non inverseuse de l'amplificateur dont la sortie passe à l'état 1 et applique à l'entrée non inverseuse de l'amplificateur 5, une tension $U_{coup} > U_m$, ce qui place la sortie de ce dernier dans l'état correspondant à la pleine conduction du transistor 32.

Le ou les moto-ventilateurs tournent alors en permanence à plein régime sauvegardant la vie du moteur thermique dont la température du fonctionnement descend en-dessous de la normale, ce qui ne peut en aucun cas être préjudiciable au moteur.

Ce dispositif est avantageusement complété par une alerte lumineuse ou sonore 50 commandée par le transistor 49 et se trouvant dans l'habitacle du véhicule ou sur le tableau de commande du moteur thermique, afin de prévenir le conducteur ou l'opérateur de l'anomalie détectée.

L'alimentation du circuit de signalisation 48 est avantageusement assurée directement par la batterie pour ne pas être tributaire d'une avarie dans le circuit principal de la Fig. 1.

La Fig. 8 montre une première réalisation pratique de l'invention regroupant dans un seul bloc 51 l'ensemble des circuits décrits ci-dessus, c'est-à-dire réalisant les fonctions de commande, de puissance et de sécurité. Dans ces conditions, le bloc comporte deux bornes d'alimentation 52, deux bornes 53 de prise de mesure raccordées à la thermistance 10, deux bornes de sortie 54 conduisant au moto-ventilateur 55 et enfin deux bornes 56 de signalisation d'avarie raccordées à un organe avertisseur. Une telle unité unique est appropriée pour des puissances absorbées n'allant pas au-delà de 60 W, par exemple.

La Fig. 9 montre un exemple de réalisation de l'invention pour des puissances absorbées plus élevées. Dans ce cas, un bloc 57 renferme les circuits ne réalisant que les fonctions de commande et de sécurité, les fonctions de puissance étant réalisées dans deux blocs de puissance 58 et 59 distincts pour des raisons de dissipation thermique, chacun alimentant un ventilateur séparé 60 ou 61. Ceux-ci peuvent ainsi absorber chacun jusqu'à 300 W.

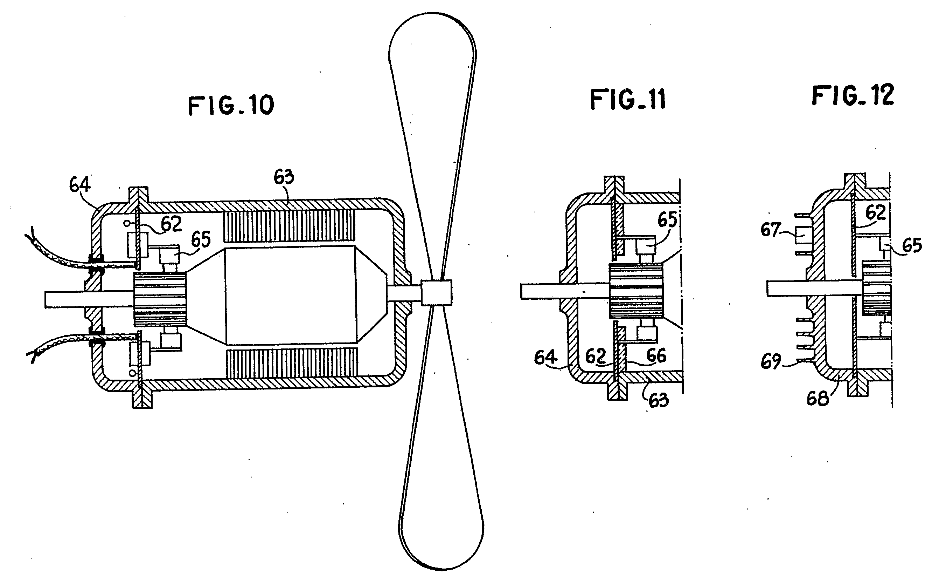

Les Fig. 10 à 12 montrent comment le dispositif de l'invention peut être intégré au moteur même entraînant le ventilateur.

Le circuit est réalisé sur une plaquette de circuit imprimé 62 fixée entre la culasse 63 du moteur et l'un de ses capots d'extrémité 64 recouvrant la partie de collecteur du moteur. Outre le circuit de l'invention, cette plaquette supporte avantageusement les balais 65 et transmet l'alimentation au moteur. La face de la plaquette 62 tournée vers l'intérieur est avantageusement isolée pour éviter le contact avec les poussières conductrices provenant des balais 65 (Fig. 10).

Sur la Fig. 11, la plaquette 62 est séparée d'une plaquette porte-balais 66 évitant ainsi d'une autre façon la difficulté que l'on vient de citer.

La Fig. 12 montre une solution favorisant la dissipation thermique des composants de puissance 67 du dispositif. Ceux-ci sont avantageusement montés à l'extérieur d'un capot 68 pourvu d'ailettes de refroidissement 69, la plaquette de circuit imprimé 62 étant montée comme dans le cas de la Fig. 10.

On notera que les amplificateurs opérationnels 4 à 7 ou éventuellement les amplificateurs 4, 5, 6 et 40 peuvent être formés par un seul et même circuit intégré disponible dans le commerce, ce qui réduit d'autant la taille du montage assemblé.

Dans l'exemple de réalisation décrit à propos des Fig. 1 à 7, le dispositif de commande est utilisé pour un moteur à combustion interne refroidi par eau.

L'invention peut être appliqué également aux moteurs à refroidissement par air, la thermistance 10 étant alors placée dans le circuit de lubrification du moteur par exemple dans le carter d'huile ou à la sortie du circuit d'huile du moteur.

## Revendications

1. Groupe motoventilateur pour la commande des moyens de ventilation du radiateur d'un moteur à combustion interne comportant un capteur de température (10) sensible à une plage continue de température et placé au contact d'un fluide caloporteur circulant dans le moteur ainsi qu'un circuit de commande de puissance (31, 32; 58, 59) pour assurer l'alimentation du ou des moteurs d'entraînement (9; 9A, 9B; 95; 60, 61) des moyens de ventilation du groupe en fonction des variations de la température du fluide caloporteur, par l'intermédiaire d'une boucle (4 à 6, 8) de réglage continu connectée entre le capteur et le circuit de commande, cette boucle comprenant un circuit à seuil (19, 20, 21) fixant la valeur inférieure de ladite plage de température, caractérisé en ce que l'entrée (P) de la boucle de réglage à laquelle est raccordé ledit capteur (10) est connectée en outre à un circuit de protection contre une rupture des connexions allant audit capteur (10), ce circuit comprenant une source de tension de référence (43, 44), un circuit capable de détecter un potentiel aux bornes du capteur (10) et un comparateur (40) qui surveille par ses entrées ladite source de référence (43, 44) et ledit circuit de détection (41, 42) pour commander ledit circuit de commande de puissance (31, 32; 58, 59) de manière qu'il applique la pleine puissance aux moteurs en cas de rupture de l'une desdites connexions du capteur (10).

2. Groupe suivant la revendication 1, caractérisé en ce que ledit circuit de puissance (31, 32; 58, 59), ladite boucle de réglage ainsi que ledit circuit de protection (40) sont montés sur une plaquette de circuit imprimé (62) logée dans le carter (63) du moteur.

3. Groupe suivant la revendication 2, caractérisé en ce que le ou les composants du circuit de commande de puissance (31, 32; 58, 59) sont montés sur un capot (68) du moteur pourvu d'ailettes de refroidissement (69).

4. Groupe suivant l'une quelconque des revendications 2 et 3, caractérisé en ce que ladite plaquette (62) est agencée pour supporter les balais (65) dudit moteur et en ce que cette plaquette comporte des moyens de protection (66) pour éviter la mise en contact avec des poussières dégagées par ces balais.

5. Groupe suivant l'une quelconque des revendications 2 à 5, caractérisé en ce qu'il comporte plusieurs circuits de puissance (58, 59) commandés simultanément et en parallèle et alimentant des motoventilateurs distincts (60, 61).

**Patentansprüche**

1. Lüftersatz zur Steuerung von Ventilationsmitteln eines Verbrennungsmotorkühlers mit einem Temperaturfühler (10), der auf einen zusammenhängenden Temperaturbereich anspricht und in Kontakt mit einer im Motor zirkulierenden Wärmeübertragungsflüssigkeit gebracht ist, und der eine Leistungssteuerungsschaltung (31, 32; 58, 59) besitzt, um die Versorgung des oder der Antriebsmotoren (9; 9A, 9B; 55; 60, 61) der Lüftungsmittel des Satzes abhängig von dem Temperaturschwankungen der Wärmeübertragungsflüssigkeit mittels einer Regelschleife (4 à 6, 8) zu gewährleisten, die ständig an den Fühler und die Steuerungsschaltung angeschlossen ist, wobei diese Schleife eine Schwellenschaltung (19, 20, 21) aufweist, welche den unteren Wert des Temperaturbereichs festlegt, dadurch gekennzeichnet, daß der Eingang (P) der Regelschleife, an den der Fühler (10) angeschlossen ist, außerdem mit einem Schutzkreis gegen Unterbrechung der zum Fühler (10) gehenden Verbindungen verbunden ist, wobei dieser Kreis eine Bezugsspannungsquelle (43, 44), einen Schaltkreis, der in der Lage ist, ein Begrenzungspotential des Fühlers (10) nachzuweisen, und einen Vergleicher (40) aufweist, der mittels seiner Eingänge die Bezugsspannungsquelle (41, 42) und den Anzeigekreis (41, 42) überwacht, um die Leistungssteuerungsschaltung (31, 32; 58, 59) derart zu überwachen, daß er in dem Fall die volle Leistung an die Motoren legt, wenn eine Unterbrechung einer der Verbindungen des Fühlers (10) eintritt.

2. Satz nach Anspruch 1, dadurch gekennzeichnet, daß die Leistungsschaltung (31, 32; 58, 59), die Regelschleife sowie der Schutzkreis (40) auf einer gedruckten Schaltungsplatine (62) angeordnet sind, die im Motorengehäuse (63) untergebracht ist.

3. Satz nach Anspruch 2, dadurch gekennzeichnet, daß der oder die Bestandteile der Leistungssteuerungsschaltung (31, 32; 58, 59) auf eine Haube (68) des Motors angebracht und mit Kühlrippen (69) versehen sind.

4. Satz nach einem der Ansprüche 2 und 3, dadurch gekennzeichnet, daß die Platine (65) so beschaffen ist, daß sie die Bürsten (65) des Motors trägt, und daß diese Platine Schutzmittel (66) aufweist, um die Kontaktherstellung mit durch die Bürsten freiwerdendem Staub zu verhindern.

5. Satz nach einem der Ansprüche 2 bis 4, dadurch gekennzeichnet, daß er mehrere Leistungsschaltungen (58, 59) aufweist, die gleichzeitig und parallel und die einzelnen Lüfter (60, 61) versorgend gesteuert sind.

**Claims**

1. Motor-fan unit for controlling ventilating means of a radiator of an internal combustion engine comprising a temperature sensor (10) responsive to a continuous range of temperature and placed in contact with a heat-carrying fluid circulating in the engine and a power control circuit (31, 32; 58, 59) for supplying the motor or motors (9; 9A, 9B; 55; 60, 61) driving the ventilating means of the unit as a function of the variations in the temperature of the heat-carrying fluid, by means of a continuous regulating loop (4 to 6, 8) connected between the sensor and the control circuit, said loop comprising a threshold circuit (19, 20, 21) determining the lower value of said temperature range, characterized in that the input (P) of the regulating loop to which is connected said sensor is further connected to a protection circuit for protecting against the break of the connections leading to said sensor (10), said protection circuit comprising a reference voltage source (43, 44), a circuit capable of detecting a potential at the terminals of said sensor (10), and a comparator (40) whose inputs are connected to said reference voltage source (43, 44) and said detection circuit (41, 42) for controlling said power control circuit (31, 32; 58, 59) so that it supplies full voltage to the motors in the event of a break in one of said connections of the sensor (10).

2. Unit according to claim 1, characterized in that said power circuit (31, 32; 58, 59) said regulating loop and said protection circuit (40) are mounted on a printed circuit board (62) disposed in the case (63) of the motor.

3. Unit according to claim 2, characterized in that the component or components of the power control circuit (31, 32; 58, 59) are mounted on a cover (68) of the motor provided with cooling fins.

4. Unit according to claims 2 and 3, characterized in that said board (62) is adapted to support the brushes (65) of said motor and said board includes protecting means (66) for avoiding its contact with dust emanating from said brushes.

5. Unit according to any one of the claims 2 to 4, characterized in that it comprises a plurality of power circuits (58, 59) which are controlled simultaneously and in parallel and which supply power to distinct motor-fans (60, 61).

**FIG.1**

# FIG. 2

# FIG. 6

# FIG. 5

FIG.3

a

$u_p$

$u_{EI}$

$u_p$

$T_0^o$

$T^o$

b

$u_c$

$T^o$

$T^o$

c

$u_c$

$u_{cm}$

$T_A$

$T^o$

FIG.4

a

$u_{oscillateur}$   $u_M$   $u_c$

$u_{cm}$

$u_m$

temps

b

$u_s$

$t_m$   $t_m$

temps

c

$u_s$

$t_)$

temps

d

$u_s$

$T$

temps

0 042 333

**FIG.7**

vers ampli 5

**FIG.8**

**FIG.9**

FIG.10

FIG.11

FIG.12

0 042 333